# EUROPEAN PATENT APPLICATION

(11) **EP 4 703 012 A1**
(43) Date of publication of application: **04.03.2026**
(21) Application number: 25195182.8
(22) Date of filing: 11.08.2025
(51) Int. Cl.: A62C 3/07, A62C 3/16, A62C 33/06, H01M 10/613, H01M 10/65, H01M 10/6557, H01M 10/658, H01M 50/204, H01M 50/209, H01M 50/289, H01M 50/291, H01M 50/383

(54) **BATTERY PACK AND ENERGY STORAGE SYSTEM INCLUDING THE SAME**

(30) Priority: 03.09.2024 KR 20240119145
(71) Applicant: SAMSUNG SDI CO., LTD., Yongin-si, Gyeonggi-do 17084 (KR)
(72) Inventor: KIM, Daesu, 17084 Yongin-Si, Gyeonggi-do (KR)
(74) Representative: Gulde & Partner

(57) **Abstract**

According to embodiments of the present disclosure, a battery pack includes a case configured to have an accommodation space therein, at least one battery module configured to be disposed in the accommodation space and include a plurality of battery cells, a fire extinguishing pipe configured to be disposed in the accommodation space and have a fire extinguishing agent, and at least one heat insulating material configured to be disposed between the battery module and the fire extinguishing pipe and have a plurality of holes formed at a position corresponding to that of the fire extinguishing pipe, wherein the heat insulating material covers a side surface of the battery module, and wherein the fire extinguishing pipe melts at a temperature equal to or greater than a threshold value, and a fire extinguishing agent in the fire extinguishing pipe is discharged into the accommodation space.

## Description

### FIELD

Aspects of embodiments of the present disclosure relate to a battery pack and an energy storage system (ESS) including the same.

### BACKGROUND

An energy storage system (ESS) is a system that stores produced electric energy using lithium-ion batteries, etc., and then allows the electric energy to be used when needed. The use of the ESS has enabled more efficient use of energy across all stages of power generation, transmission, substations, distribution, and reception. As a result, more consistent quality electricity usage has become possible from new renewable energy sources such as solar and wind power.

The ESS is a system that stores excess energy produced as it is or after conversion, and may be used when needed. Battery packs used in the ESS may include multiple lithium-ion batteries. Lithium-ion batteries have high energy efficiency, but their fire risk is higher than that of nickel-cadmium or nickel-hydrogen batteries, and there have been cases of lithium-ion ESS fires occurring both domestically and internationally. Therefore, ESS, especially lithium-ion ESS, needs to be equipped with fire extinguishing facilities to suppress fire, and for example, ESS needs to satisfy the certification of UL9540A, which is a large-scale fire test.

Thermal runaway in lithium-ion batteries may result in fire or explosion, and may spread to adjacent cells and modules. If a thermal runaway transition occurs, response is very difficult due to the high fire intensity and risk of continuous explosion.

Conventional fire extinguishing systems have installed fire extinguishing pipes that supply extinguishing agents directly between batteries to suppress fires. However, in the event of a battery fire, a wide section of the fire extinguishing duct may melt at once due to the strong ignition of the battery that caused the fire. If a wide section of the fire extinguishing pipe melts, there is a problem in that the fire extinguishing agent cannot be sprayed intensively on the battery where the fire occurred.

The above information disclosed in this Background section is for enhancement of understanding of the background of the present disclosure, and therefore, it may contain information that does not constitute related (or prior) art.

### SUMMARY

The present disclosure has been proposed to solve the above technical problems, and aspects of embodiments of the present disclosure are to provide a battery pack and an energy storage system (ESS) including the same.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to embodiments of the present disclosure, a battery pack includes a case configured to have an accommodation space therein, at least one battery module configured to be disposed in the accommodation space and include a plurality of battery cells, a fire extinguishing pipe configured to be disposed in the accommodation space and have (or contain) a fire extinguishing agent, and at least one heat insulating material configured to be disposed between the battery module and the fire extinguishing pipe and have a plurality of holes formed at a position corresponding to that of the fire extinguishing pipe, wherein the heat insulating material covers a side surface of the battery module, and wherein the fire extinguishing pipe melts at a temperature equal to or greater than a threshold value, and a fire extinguishing agent in the fire extinguishing pipe is discharged into the accommodation space.

According to some embodiments, the battery module may be disposed along a longitudinal direction of the case, and the fire extinguishing pipe may extend along the longitudinal direction of the case, spaced a predetermined distance from a side surface of the battery module.

According to some embodiments, each of the plurality of holes may correspond to each side surface of the plurality of battery cells, and the fire extinguishing pipe may include a plurality of melting regions corresponding to the plurality of holes.

According to some embodiments, the plurality of melting regions may include a first melting region that melts at a temperature equal to or greater than the threshold value, the plurality of battery cells may include a first battery cell corresponding to the first melting region, and the fire extinguishing agent may be supplied toward the first battery cell through the first melting region at a temperature equal to or greater than the threshold value.

According to some embodiments, each of the plurality of holes may correspond to a side surface of two or three adjacent battery cells among the plurality of battery cells.

According to some embodiments, a shape of each of the plurality of holes may be at least one of a rectangle, a square, a circle, an oval, and a shape in which an upper semicircle is in contact with a lower semicircle at a straight line.

According to some embodiments, a length of each of the plurality of holes along a longitudinal direction of the case may be smaller than a length of each of the plurality of battery cells along the longitudinal direction.

According to some embodiments, a length of each of the plurality of holes along a thickness direction of the case may be greater than an outer diameter of the fire extinguishing pipe.

According to some embodiments, a center of each of the plurality of holes may correspond to a height of the fire extinguishing pipe.

According to some embodiments, a melting temperature of the fire extinguishing pipe may correspond to an ignition temperature of the plurality of battery cells.

According to some embodiments, a material of the heat insulating material may include at least one of a fiber material, a refractory material, and a reinforced polymer.

According to some embodiments, the at least one battery module may include a first battery module and a second battery module which are spaced apart from one another with a predetermined gap along a width direction of the case, and the fire extinguishing pipe may be disposed between the first battery module and the second battery module.

According to some embodiments, the heat insulating material may include a first heat insulating material disposed between the first battery module and the fire extinguishing pipe, and a second heat insulating material disposed between the second battery module and the fire extinguishing pipe.

According to some embodiments, the plurality of battery cells may be disposed side by side along a longitudinal direction of the case.

According to some embodiments, the battery pack may further include at least one heat insulating material, each of which is disposed between two adjacent battery cells among the plurality of battery cells.

According to some embodiments, a material of the fire extinguishing pipe may include at least one of polypropylene (PP), linear low density polyethylene (LLDPE), polyvinyl chloride (PVC), polyamide 6 (PA6), and polyamide 66 (PA66).

According to some embodiments, at least one of the battery module may include a first battery module and a second battery module, wherein the battery pack may further include an upper heat insulating material configured to be disposed between the first battery module and the second battery module and to be positioned at an upper side of the fire extinguishing pipe, and a lower heat insulating material configured to be disposed between the first battery module and the second battery module and to be positioned at a lower side of the fire extinguishing pipe.

According to further embodiments of the present disclosure, an energy storage system may include the battery pack as described above.

According to some embodiments, the energy storage system may further include a lower panel configured to be installed between a lower plate of the case and the plurality of battery cells and configured to support lower portions of the plurality of battery cells and block the fire extinguishing agent, which is supplied through the fire extinguishing pipe, from moving to the lower plate.

According to some embodiments, the lower panel may include a panel body configured to be installed in a plate shape between the lower plate of the case and the plurality of battery cells to block the movement of the fire extinguishing agent, a first guide portion configured to be installed on an upper side surface of the panel body and form a flow path in a longitudinal direction of the case to guide the movement of the fire extinguishing agent, and a second guide portion configured to be installed on an upper side surface of the panel body and form a flow path in a width direction of the case to guide the movement of the fire extinguishing agent.

According to some embodiments of the present disclosure, by placing heat insulating material with multiple holes formed within a battery pack to insulate part of a fire extinguishing pipe containing a fire-extinguishing agent, only the area of the fire extinguishing pipe through which heat is transmitted via the holes may melt, allowing the fire extinguishing agent to be intensively discharged toward the initially ignited battery cell.

According to some embodiments of the present disclosure, a fire extinguishing system with enhanced initial extinguishing capability may be established in an energy storage system that includes a battery pack as described above.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is an exploded perspective view of a battery pack according to embodiments of the present disclosure.
FIG. 2 is a perspective view of a battery pack according to embodiments of the present disclosure.
FIG. 3 is a perspective view illustrating a fire extinguishing pipe disposed inside a case according to embodiments of the present disclosure.
FIG. 4 is a cross-sectional view illustrating one section of a battery pack according to embodiments of the present disclosure.
FIG. 5 shows a state in which a fire extinguishing agent is sprayed in a fire extinguishing pipe according to a comparative example of the present disclosure.
FIG. 6 shows a state in which a fire extinguishing agent is sprayed in a fire extinguishing pipe according to embodiments of the present disclosure.
FIG. 7 is an enlarged view of a hole in a heat insulating material according to embodiments of the present disclosure.
FIG. 8 is an enlarged view of a hole in a heat insulating material according to embodiments of the present disclosure.
FIG. 9 is an enlarged view of a hole in a heat insulating material according to embodiments of the present disclosure.
FIG. 10 is a cross-sectional side view of a battery cell having a heat insulating material disposed thereon according to embodiments of the present disclosure.
FIG. 11 is a perspective view illustrating a part of an energy storage system (ESS)
according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery module according to the present disclosure may include an electrode unit, a plurality of battery cells arranged in one direction, a connection tab connecting the battery cells to adjacent battery cells, and a protection circuit module having one end connected to the connection tab. The protection circuit module may be a battery management system (BMS). The connection tab includes a body unit that contacts the electrode unit between adjacent battery cells, and an extension unit that extends from the body unit and is connected to the protection circuit module. The connection tab may be a bus bar.

First, a battery cell may be composed of a case, and an electrode assembly and an electrolyte solution accommodated in the case. The electrode assembly and the electrolyte solution react electrochemically to generate energy. One side of the battery cell may be provided with a terminal unit electrically connected to the connection tab, and a vent as a passage for discharging gas generated internally. The terminal unit of the battery cell may be a positive terminal and a negative terminal having different polarities, and the terminal units of adjacent battery cells may be electrically connected in series or in parallel by connection tabs. Although the present disclosure has been described using a serial connection as an example, the embodiment is not limited to this structure and various connection structures may be adopted as needed. The number and arrangement of battery cells are not limited to the structure illustrated in the drawings of the present disclosure and may be changed as needed.

A plurality of battery cells may be arranged in one direction so that wide surfaces of the battery cells face each other, and the arranged plurality of battery cells may be fixed by a housing. The housing may include a pair of end plates facing the wide surfaces of the battery cells, and a side plate and a bottom plate connecting the pair of end plates. The side plate may support the side surface of the battery cell, and the bottom plate may support the bottom surface of the battery cell. The pair of end plates, the side plate and the bottom plate may be connected by members such as bolts.

A battery pack may include a plurality of battery modules and a housing for accommodating the plurality of battery modules. For example, the housing may include first and second housings coupled facing each other with a plurality of battery modules interposed therebetween. Multiple battery modules may be electrically connected to each other using bus bars, and multiple battery modules may be electrically connected to each other in a series/parallel or series-parallel mixed manner to obtain the required electrical output.

A battery pack includes at least one battery module and a pack housing having an accommodation space formed to accommodate the at least one battery module.

A battery module may have a plurality of battery cells and a module housing. A plurality of battery cells may be accommodated inside the module housing in a stacked form. The battery cell may be provided with a positive lead and a negative lead. Depending on the battery shape, battery cells may be of a circular type, a prismatic type, or a pouch type.

In the battery pack, one cell stack may form one module instead of a battery module. The cell stack may be accommodated in an accommodation space within the pack housing or may be accommodated in an accommodation space partitioned by a frame, a partition wall, etc.

Battery cells generate a lot of heat during charging and discharging. The generated heat accumulates in the battery cells and accelerates the deterioration of the battery cells. Accordingly, the battery pack may further include a cooling member to suppress battery cell deterioration. The cooling member is provided at the bottom of the accommodation space where the battery cells are positioned, but the embodiment is not limited to this example and may also be provided at the upper portion or the side portion, depending on the battery pack.

In the battery cell, exhaust gas inside the battery cell, which is generated under abnormal operating conditions, also known as thermal runaway or thermal event, may be discharged to the outside of the battery cell. The battery pack or battery module may be provided with an exhaust port or the like for discharging exhaust gas to prevent damage to the battery pack or module caused by exhaust gas.

The battery pack may include a battery and a battery management system (BMS) for managing the battery. The BMS may include a detection device, a balancing device, and a control device. A battery module may include a plurality of battery cells connected in series or parallel with each other. Battery modules may be connected to each other in series or parallel.

The detection device may detect status information indicating the status of the battery by detecting the status of the battery (e.g., 1 or more out of voltage, current, temperature, etc.). The detection device may detect the voltage of each cell or each battery module constituting the battery. The detection device may also detect current flowing through each battery module constituting the battery module or battery pack. The detection device may also detect the ambient temperature of a cell and/or module at at least one point in the battery.

The balancing device may perform a balancing operation of battery modules and/or cells constituting the battery. The control device may receive status information (e.g., one or more out of voltage, current, temperature, etc.) of the battery module from the detection device. The control device may monitor and calculate the status (e.g., voltage, current, temperature, state of charge (SOC), state of health (SOH), etc.) of the battery module based on the status information received from the detection device. The control device may perform control functions (e.g., temperature control, balancing control, charge/discharge control, etc.), protection functions (e.g., overdischarge, overcharge, overcurrent prevention, short circuit, fire extinguishing function, etc.) based on the status monitoring results. The control device may perform wired or wireless communication functions with external devices of the battery pack (e.g., a higher level controller, a vehicle, a charger or PCS).

The control device may also control charging and discharging operations and protection operations of the battery. To this end, the control device may include a charge/discharge control unit, a balancing control unit, and a protection unit.

A battery management system (BMS) is a system that monitors the battery status and performs diagnosis and control, communication, and protection functions. The BMS may calculate the charge and discharge status, calculate the battery life or state of health (SOH), cut off battery power (relay control) when necessary, perform thermal management (cooling, heating, etc.) control, perform high-voltage interlock functions, and detect or calculate insulation and short-circuit conditions.

A relay may be a mechanical contactor that is turned on and off by the magnetic force of a coil, or a semiconductor switch such as a metal oxide semiconductor field effect transistor (MOSFET).

Relay control is a function that cuts off the power supply from the battery in the event of a problem with the vehicle and battery system, and may be composed of at least one relay and precharge relay on the positive terminal and the negative terminal.

Because there is a risk of inrush current occurring in the high-voltage capacitor on the inverter input side when the battery load is connected, the precharge control may have a function to operate the precharge relay before connecting the main relay when the vehicle is started to thereby be connected to the precharge resistor in order to prevent inrush current.

A high-voltage interlock is a circuit that uses a small signal to detect whether all high-voltage components in the entire vehicle system are connected, and may be equipped with a function to force the relay to open if even one spot is opened in the entire loop.

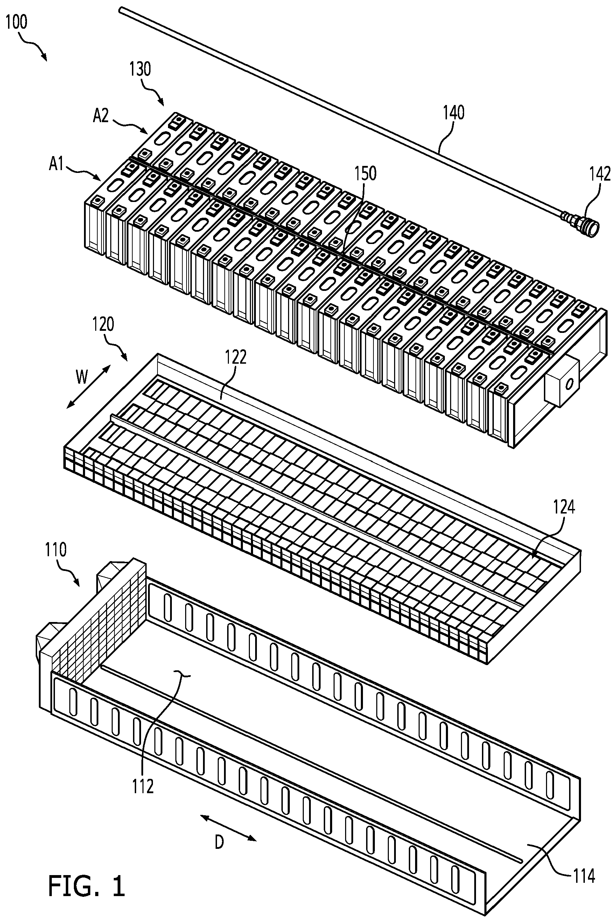

FIG. 1 is an exploded perspective view of a battery pack according to embodiments of the present disclosure.

Referring to FIG. 1, a battery pack 100 according to embodiments of the present disclosure may include a case 110 having an accommodation space 112 provided therein, one or more battery modules A1 and A2 disposed in the accommodation space 112 and including a plurality of battery cells 130, a fire extinguishing pipe 140 disposed in the accommodation space 112 and containing a fire extinguishing agent, and one or more heat insulating materials 150 disposed between the battery module A1 and A2 and the fire extinguishing pipe 140 and having a plurality of holes formed at the position (or at positions) corresponding to the fire extinguishing pipe 140. The heat insulating material 150 may cover the side surfaces of the battery modules A1 and A2.

A plurality of battery cells 130 constituting a battery pack 100 according to embodiments may be circular, prismatic, pouch battery cells, etc., and are not limited in type and shape. The accommodation space 112 of the case 110 may be transformed into various sizes and shapes depending on the type and shape of the battery cell 130.

A heat insulating material 150 according to embodiments of the present disclosure may be disposed in all or part of an area where a plurality of battery cells 130 are adjacent. The heat insulating material 150 may prevent thermal runaway from occurring due to heat transfer to adjacent battery cells 130 even if a battery cell ignites within the battery pack 100. The heat insulating material 150 according to the present disclosure may be formed integrally or may be formed separately (e.g., separately from the case 110) and arranged in multiple pieces.

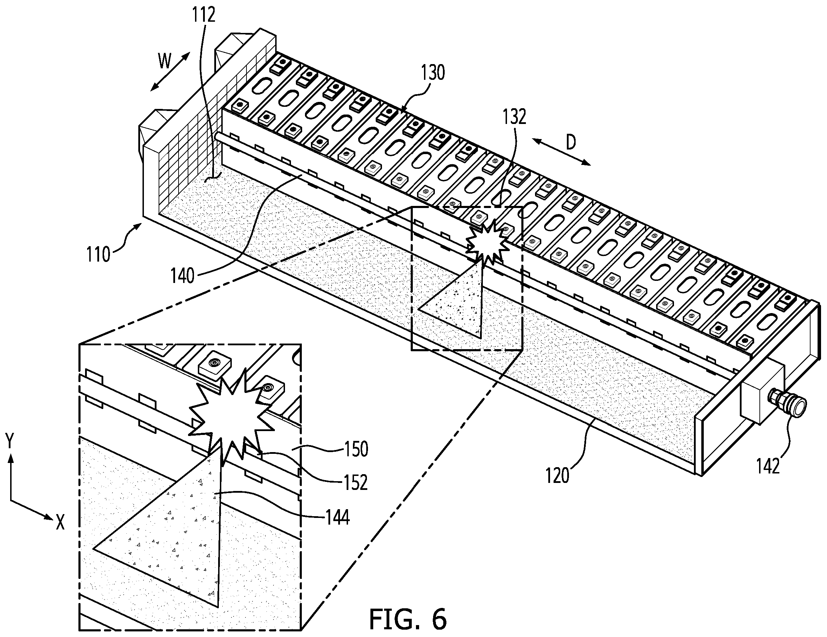

A plurality of holes may be formed in the heat insulating material 150 at the position corresponding to the fire extinguishing pipe 140. For example, this means that the heat insulating material 150 may have a plurality of holes formed in a portion adjacent to the fire extinguishing pipe 140. The heat insulating material 150 will be described in detail with reference to FIGs. 6 to 11.

The fire extinguishing pipe 140 may melt at a temperature equal to or greater than a threshold, so that fire extinguishing agents contained in the fire extinguishing pipe 140 may be discharged into the accommodation space 112 of the case 110. The threshold may be the ignition temperature of the battery cell due to thermal runaway. More specifically, the threshold may refer to the surface temperature of the battery cell where the first thermal runaway occurred.

Throughout the present disclosure, the longitudinal direction D of the case 110 may mean a direction parallel to the longer part based on the upper surface of the case 110. The width direction W of the case 110 may mean a direction parallel to the short part based on the upper surface of the case 110.

An energy storage system (ESS) according to embodiments of the present disclosure may include a battery pack 100 as described above. The energy storage system (ESS) may further include a lower panel 120 which is installed between a lower plate 114 of the case 110 and the plurality of battery cells 130 to support the lower portion of the plurality of battery cells 130. The lower panel 120 may block the fire extinguishing agent, which is discharged from the melted fire extinguishing pipe 140, from moving to the lower plate 114.

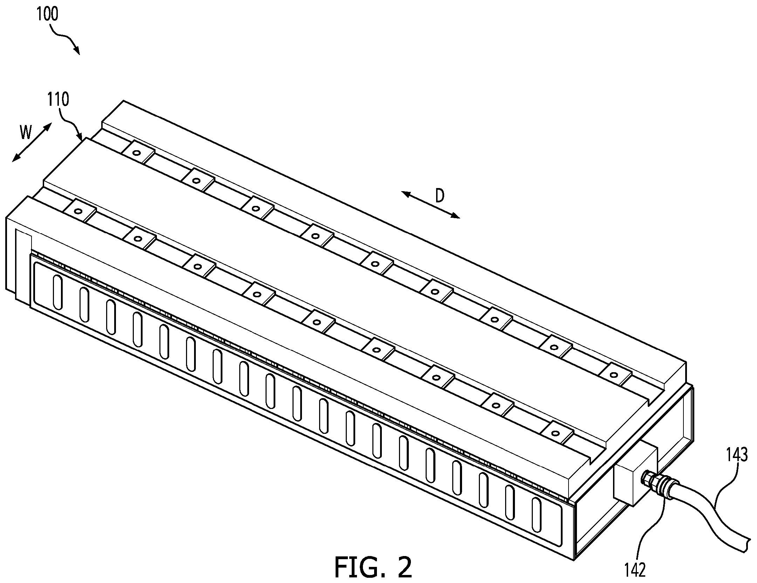

FIG. 2 is a perspective view of a battery pack according to embodiments of the present disclosure. FIG. 2 shows the appearance of a case 110 equipped with a fire extinguishing pipe140 in a battery pack 100, and shows a structure that allows a fire extinguishing agent to be supplied to the fire extinguishing pipe 140.

The fire extinguishing pipe 140 may be disposed in the accommodation space 112 of the case 110. The battery pack 100 is located on the outside of the case 110 and may include a supply pipe 143 for supplying a fire extinguishing agent from a supply source of the fire extinguishing agent and a connection pipe 142 that is a passage connected to the fire extinguishing pipe 140.

The fire extinguishing pipe 140 according to embodiments may be in the shape of a pipe with a sealed interior, but the embodiment is not limited to this example. The fire extinguishing pipe 140 has an inner diameter and an outer diameter due to the thickness of the material. More specifically, as the entire portion corresponding to the thickness of the fire extinguishing pipe 140, which is greater than or equal to the inner diameter and is less than or equal to the outer diameter, is melted, a through hole may be formed in the exterior of the fire extinguishing pipe 140, thereby exposing the fire extinguishing agent at the inside. To this end, the melting temperature of the fire extinguishing pipe 140 may correspond to the ignition temperature of a plurality of battery cells 130. For example, the melting temperature of the fire extinguishing pipe may be set to 80°C to 300°C, to 100°C to 260°C, to 120°C to 230 °C, or to 150°C to 220°C.

In the event of an ignition event or thermal runaway in a battery cell 130 within a battery pack 100 according to embodiments, the fire extinguishing pipe 140 may melt, allowing the contained fire extinguishing agent to be discharged toward an adjacent battery cell 130. When thermal runaway occurs in the battery cell 130, thermal runaway to adjacent battery cells 130 and/or battery modules A1 and A2 may be blocked by the cooling effect of the discharged fire extinguishing agent.

There is no limitation on the type of the fire extinguishing agent as long as it is a material capable of extinguishing a fire caused by thermal runaway of the battery cells 130. For example, the fire extinguishing agent may be a solid, liquid, or gaseous substance with a cooling effect, and the gaseous substance may include carbon dioxide extinguishing agents, halide extinguishing agents, the solid substance may include phosphate extinguishing agents, bicarbonate extinguishing agents, and the liquid substance may include acid-alkali extinguishing agents, reinforced liquid extinguishing agents, and foam extinguishing agents. Specifically, the fire extinguishing agent may be any one of heptafluoropropane, a water-based extinguishing agent for cooling extinguishment, and 1,1,1,2,3,3,3-hexafluoropropane. In order to prevent thermal runaway transition, an appropriate fire extinguishing agent may be selected based on the battery cell capacity.

The material of the fire extinguishing pipe 140 is not particularly limited as long as it is a material that can melt at the ignition temperature of the battery cell 130 or the surface temperature of the battery cell 130 where ignition occurred, as described above. For example, the material of the fire extinguishing pipe 140 may include at least one of polypropylene (PP), linear low density polyethylene (LLDPE), polyvinyl chloride (PVC), polyamide 6 (PA6), and polyamide 66 (PA66).

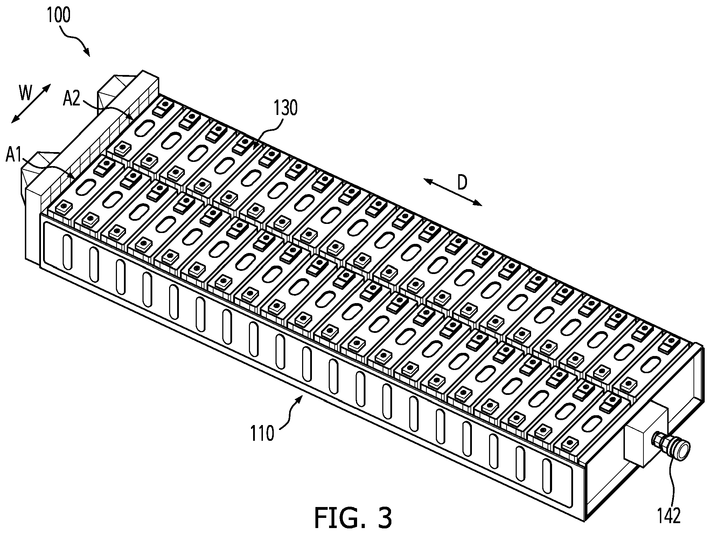

FIG. 3 is a perspective view illustrating a fire extinguishing pipe disposed inside a case according to embodiments of the present disclosure.

Referring to FIG. 3, a plurality of battery cells 130 constituting a battery pack 100 according to embodiments may be arranged side by side along the longitudinal direction D of the case 110. There is no limitation on the number of battery cells 130 arranged side by side along the longitudinal direction D of the case, and the plurality of battery cells 130 may be arranged side by side to form one battery module A1 or A2. A plurality of battery cells 130 may be arranged in series as shown in FIG. 3, but may also be arranged in parallel, and there is no limitation on the arrangement form of the battery cells 130.

Referring to FIG. 3, one or more battery modules constituting a battery pack 100 according to embodiments may include a first battery module A1 and a second battery module A2 which are arranged with a predetermined gap along the width direction W of the case 110. The fire extinguishing pipe 140 according to embodiments may be disposed between the first battery module A1 and the second battery module A2. The heat insulating material 150 of the battery pack according to embodiments may include a first heat insulating material disposed between the first battery module A1 and the fire extinguishing pipe 140, and a second heat insulating material disposed between the second battery module A2 and the fire extinguishing pipe 140. Accordingly, the predetermined gap between the first battery module A1 and the second battery module A2 may mean a gap sufficient to dispose the fire extinguishing pipe 140 and the heat insulating material 150.

The number of battery modules constituting a battery pack 100 and an energy storage system (ESS) including the same according to embodiments is not particularly limited, and there is no limitation on the arrangement form of the battery modules.

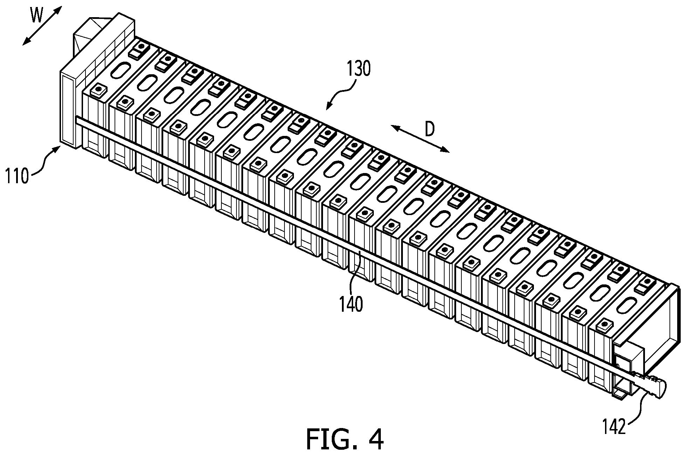

FIG. 4 is a cross-sectional view illustrating one section of a battery pack according to embodiments of the present disclosure. Referring to FIG. 4, the illustration of the heat insulating material 150 is omitted.

Referring to FIG. 4, the battery module constituting the battery pack 100 according to embodiments is arranged along the longitudinal direction D of the case 110, and the fire extinguishing pipe 140 may extend from the side surface of the battery module with a predetermined gap along the longitudinal direction D of the case. Here, the predetermined gap may correspond to the thickness of the heat insulating material 150 disposed between the fire extinguishing pipe 140 and the battery module. The thickness of the heat insulating material 150 may vary depending on the capacity of the battery cell 130, and the predetermined gap between the fire extinguishing pipe 140 and the side surface of the battery module A2 may vary depending on the thickness of the heat insulating material 150.

There is no limitation on the number and arrangement of battery modules, so the side surface of the battery module described above may be any one of the four side surfaces of the battery module. The fire extinguishing pipe 140 may be in the form of a long pipe to cover all or part of the side surface of the battery module A2 as shown in FIG. 4. When a cell event such as thermal runaway occurs in a battery cell 130 corresponding to the side surface portion of the battery module A2 covered by the fire extinguishing pipe 140, only the area of the fire extinguishing pipe 140 adjacent to the battery cell 130 corresponding to the side portion of the battery module A2 may melt.

Because the battery cell 130 constituting the battery pack 100 according to embodiments may include a circular, prismatic, or pouch battery cell and there is no limitation on the type or shape, the side surface of the battery module may be curved rather than flat as in FIG. 4, and in this circumstance, a void space may be formed between the fire extinguishing pipe 140 and the heat insulating material 150. Even in this circumstance, the fire extinguishing agent may be designed to be sprayed only to a specific battery cell 130 through a hole formed in the heat insulating material 150.

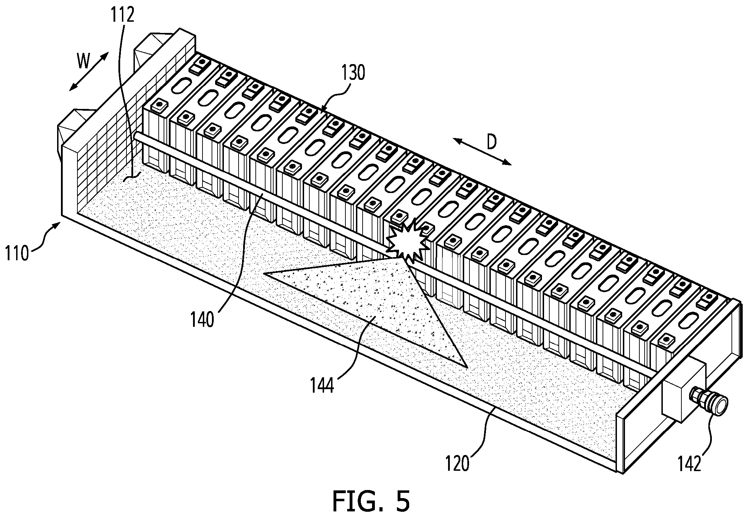

FIG. 5 shows a state in which a fire extinguishing agent is sprayed in a fire extinguishing pipe according to a comparative example of the present disclosure. Referring to FIG. 5, the illustration of the heat insulating material 150 is omitted.

In a battery pack according to a comparative example of the present disclosure, a heat insulating material 150, in which no hole is formed, may cover the side surface of a battery module constituting a battery pack, and a fire extinguishing pipe 140 may be spaced apart from the side surface of the battery module A2 by a predetermined gap and extend along the longitudinal direction D of the case 110. More specifically, the heat insulating material 150 may be hollow in a size corresponding to the fire extinguishing pipe in a corresponding area between the battery cell 130 and the fire extinguishing pipe 140 so that the heat generated from the battery cell 130 may be directly transferred to the fire extinguishing pipe 140. Alternatively, separate heat insulating materials may be disposed on the upper and lower parts of the fire extinguishing pipe 140. Because a hole is not formed in the heat insulating material 150 according to a comparative example, when a fire occurs in one battery cell, there is a problem in that the portions corresponding to the side surfaces of several battery cells 130 close to the fire battery cell 132 in the fire extinguishing pipe 140 are simultaneously melted and opened, thereby widening the initial spray range of the fire extinguishing agent 144 contained in the fire extinguishing pipe 140. For example, as illustrated in FIG. 5, there may be one fire battery cell 132, while there may be seven battery cells 130 covered by the melting fire extinguishing pipe 140. In this circumstance, the initial spray range of the fire extinguishing agent 144 becomes a wide area occupied by seven battery cells 130, so the fire extinguishing agent 144 may be unnecessarily wasted on battery cells 130 other than the fire battery cell 132.

Here, the term initial may mean the time when the fire extinguishing agent is sprayed right after the fire extinguishing pipe is opened. Therefore, according to one comparative example, the discharged fire extinguishing agent 144 may not be concentrated on extinguishing the fire in the fire battery cell 132 where the event occurred, and the initial extinguishing power of a battery pack or the energy storage system (ESS) including the same may be relatively weak.

FIG. 6 shows a state in which a fire extinguishing agent is sprayed in a fire extinguishing pipe according to embodiments of the present disclosure.

Referring to FIG. 6, a heat insulating material 150, which covers a side surface of a battery module (A2) according to embodiments of the present disclosure may be disposed between the fire extinguishing pipe 140 and the battery module (A2), and thermal runaway transition to a neighboring battery module (A1) may be prevented through the heat insulating material 150.

A plurality of holes 152 may be formed in the heat insulating material 150 at the position corresponding to the fire extinguishing pipe 140. In this circumstance, heat from the ignited fire battery cell 132 may be transmitted to the fire extinguishing pipe 140 through an adjacent hole. Accordingly, the area of the fire extinguishing pipe 140, through which heat is transferred, may be partially melted and opened, so that the fire extinguishing agent 144 may be sprayed intensively onto the fire battery cell 132.

There is no particular limitation on the thickness or number of the heat insulating material 150 according to embodiments. According to embodiments, each of the plurality of holes 152 formed in the heat insulating material 150 may correspond to the side surface of each of the plurality of battery cells 130. In other words, each of the holes 130. A hole 152 is positioned on the side surface of each battery cell 130, so that heat transfer due to ignition of the battery cell 130 may be effectively performed through the hole 152. The fire extinguishing pipe 140 may include a plurality of melting regions corresponding to a plurality of holes 152. The plurality of melting regions may be formed on the surface facing the heat insulating material 150 in the fire extinguishing pipe 140, and the illustration thereof is omitted in FIG. 6.

More specifically, the plurality of melting regions formed in the fire extinguishing pipe 140 may include a first melting region that melts at a temperature above a threshold value. The plurality of battery cells 130 may include a first battery cell corresponding to the first melting region. The fire extinguishing agent 144 may be supplied toward the first battery cell through the first melting region at a temperature above the threshold value. Accordingly, the fire extinguishing agent may be sprayed intensively on a specific fire battery cell 132 where ignition has occurred, and the initial extinguishing power of the battery pack 100 and the energy storage system (ESS) including the same may be strengthened. The threshold temperature may be, for example, the ignition temperature of the battery cell 130.

The material of the heat insulating material 150 according to embodiments is not particularly limited, but may include at least one of a fiber material, a refractory material, and a reinforced polymer. For example, the heat insulating material 150 may include at least one of MICA, aerogel, and fiber ceramic paper. The heat insulating material 150 may be selected from materials that prevent heat corresponding to the surface temperature of a battery cell, in which thermal runaway has occurred, from being transferred to a neighboring battery cell or battery module.

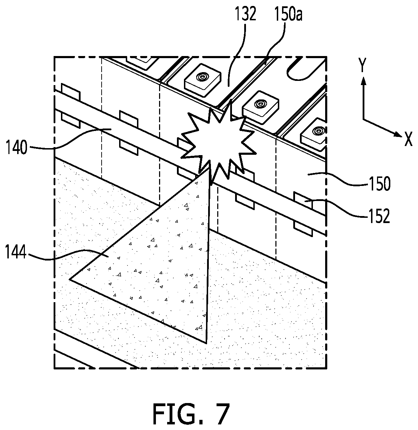

FIG. 7 is an enlarged view of a hole in a heat insulating material according to embodiments of the present disclosure.

As illustrated in FIG. 7, in a battery pack 100 according to embodiments, the length of each of the plurality of holes 152 formed in the heat insulating material 150 along the longitudinal direction D of the case 110 may be smaller than the length of each of the plurality of battery cells 130 along the longitudinal direction D. The longitudinal direction D of the case 110 means the X-axis direction in FIG. 7.

In a battery pack 100 according to embodiments, the length of each of the plurality of holes 152 in the thickness direction of the case 110 may be greater than the outer diameter of the fire extinguishing pipe 140. This may be because a melting region, which passes through the outer side of the fire extinguishing pipe 140, may be formed when melted from the external side of the fire extinguishing pipe 140. The thickness direction of the case 110 means the Y-axis direction in FIG. 7 (or a vertical direction).

In an energy storage system (ESS) according to embodiments, the inner diameter of the fire extinguishing pipe may be from 3 mm to 20 mm, from 4 mm to 15 mm, or from 5 mm to 10 mm. In this circumstance, the length of each of the plurality of holes in the thickness direction of the case 110 may be longer than 3 mm to 20 mm.

In a battery pack 100 according to embodiments, the center of each of the plurality of holes 152 may correspond to the height of the fire extinguishing pipe 140. The center of the fire extinguishing pipe 140 and the center of the Y-axis of the plurality of holes 152 may have the same height (or be arranged at the same height).

As a plurality of holes 152 having the length and height as described above are formed in the heat insulating material 150, even if a strong ignition event occurs in the battery cell 130, the adjacent battery cell 130 or battery module portion is blocked (or protected) by the heat insulating materials 150 and 150a, and only the fire extinguishing pipe 140 inside the hole 152 adjacent to the fire battery cell 132 is melted, so that the initial fire extinguishing agent 144 may be concentratedly sprayed toward the fire battery cell 132.

In this circumstance, the fire extinguishing pipe 140 may be most exposed to the hole 152 and may receive most heat transferred due to ignition of the battery cell 132. Accordingly, the melting point of time of the fire extinguishing pipe 140 may be advanced. As the melting point is advanced, the fire extinguishing function of the battery pack 100 and the energy storage system (ESS) including the same may be improved.

As illustrated in FIG. 7, the heat insulating material 150 of the battery pack according to embodiments may further include a heat insulating material 150a between a plurality of battery cells. Each of heat insulating materials 150a between the plurality of battery cells may be disposed between two adjacent battery cells among the plurality of battery cells. The heat insulating material 150a between battery cells may prevent thermal runaway transition between battery cells by minimizing heat transfer between battery cells 130 even if a thermal runaway event occurs.

The fire extinguishing pipe 140 may be disposed between the battery cell 130 (and the heat insulating material 150a, and a plurality of holes 152 may or may not be formed in the heat insulating material 150a.

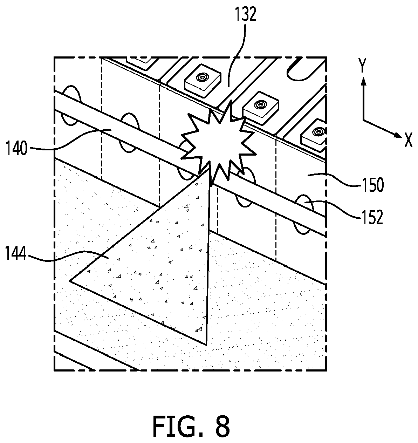

FIG. 8 is an enlarged view of a hole in a heat insulating material according to embodiments of the present disclosure.

The shape of each of the plurality of holes 152 formed in the heat insulating material 150 according to embodiments of the present disclosure may be any one of a rectangle, a square, a circle, an oval, and a shape in which an upper semicircle is in contact with a lower semicircle at a straight line. In FIG. 7, each of the plurality of holes 152 has a rectangular shape, and in FIG. 8, each of the plurality of holes 152 has an oval shape. However, there is no particular limitation on the shape of each of the plurality of holes. The shape may vary depending on the manufacturing process cost or intended use.

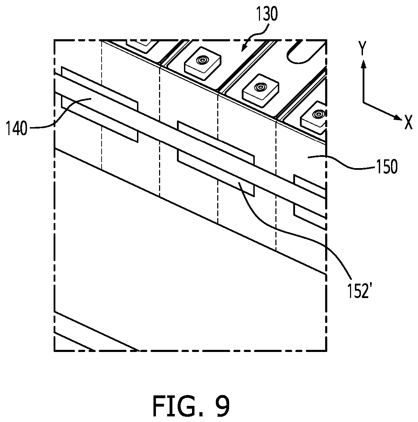

FIG. 9 is an enlarged view of a hole in a heat insulating material according to embodiments of the present disclosure.

Each of the plurality of holes 152' of the heat insulating material 150 according to embodiments may correspond to the side surfaces of two or three neighboring battery cells among the plurality of battery cells 130. Referring to FIG. 9, for example, a hole may be formed in the heat insulating material for each side surface of two neighboring battery cells in the battery module A1 or A2 where a plurality of battery cells are arranged side by side. In other words, a hole (or each of the holes) may overlap two or three neighboring battery cells 130.

In this circumstance, the length of each of the plurality of holes 152' along the longitudinal direction D of the case 110 may be smaller than the length of the area occupied by two battery cells 130 along the longitudinal direction D of the case 110. The longitudinal direction D of the case 110 means the X-axis direction in FIG. 9. The length of each case 110 of the plurality of holes 152' in the thickness direction may be greater than the outer diameter of the fire extinguishing pipe 140. The thickness direction of the case 110 means the Y-axis direction in FIG. 9.

In this circumstance, the center of each of the plurality of holes 152' may correspond to (or be arranged at) the height of the fire extinguishing pipe 140. The center of the fire extinguishing pipe 140 and the center of the Y-axis of the plurality of holes 152' may have (or be arranged at) the same height.

In embodiments, when a thermal runaway event occurs simultaneously in two or three battery cells within a battery pack, a thermal runaway event that occurs in one battery cell may be transmitted to a neighboring battery cell. As a larger melting region corresponding to the hole 152' larger than the hole 152 of FIGS. 7 and 8 is formed in the fire extinguishing pipe 140, the fire of the fire battery cell 132 in which thermal runaway has occurred may be extinguished early, thereby preventing damage to neighboring battery cells 130 to the two or three battery cells.

More specifically, in this circumstance, the number of battery cells 132 corresponding to the first melting region of the fire extinguishing pipe 140 that melts at a temperature higher than the threshold value may be two or three, and the fire extinguishing agent 144 may be supplied toward the two or three battery cells 132 through the first melting region at a temperature higher than the threshold value. The threshold value may be the lowest ignition temperature or surface temperature at thermal runaway of two or three battery cells 132.

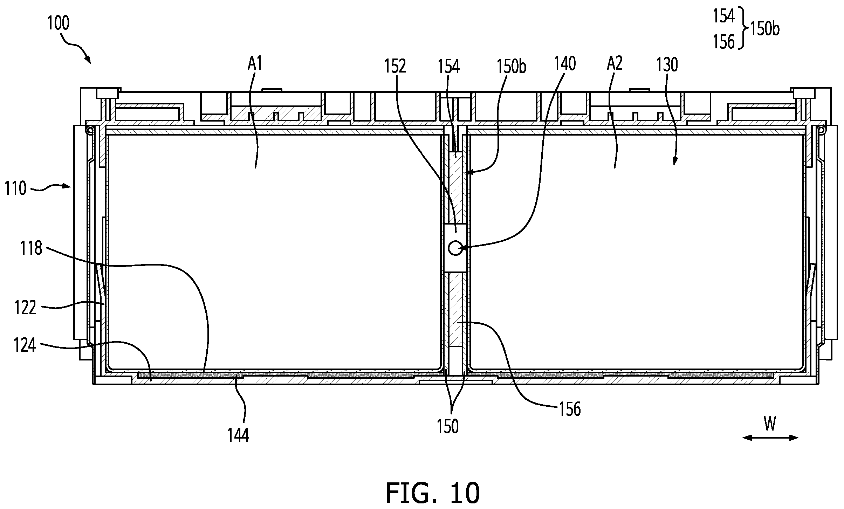

FIG. 10 is a cross-sectional side view of a battery cell having a heat insulating material disposed thereon according to embodiments of the present disclosure. FIG. 10 illustrates a cross-section of a location where a hole 152 is formed in heat insulating materials 150 and 150b according to embodiments.

The heat insulating material 150 according to embodiments of the present disclosure may include a first heat insulating material disposed between the first battery module A1 and the fire extinguishing pipe 140, and a second heat insulating material disposed between the second battery module A2 and the fire extinguishing pipe 140. This may be to minimize heat transfer between battery modules so that a fire occurring in one battery module does not cause thermal damage to other battery modules by conductive or radiant heat, resulting in thermal runaway or ignition.

A battery pack 100 according to embodiments of the present disclosure may include a case 110 having an accommodation space 112 at the inside, a first battery module A1 disposed in the accommodation space 112 and including a plurality of battery cells 130, a second battery module A2 disposed with a predetermined gap from the first battery module A1 and including a plurality of battery cells 130, a fire extinguishing pipe 140 disposed between the first battery module A1 and the second battery module A2 and including a fire extinguishing agent 144, and a plurality of heat insulating materials 150b which are disposed between the first battery module A1 and the second battery module A2 together with the fire extinguishing pipe 140, include an upper heat insulating material 154 positioned above the fire extinguishing pipe 140 and a lower heat insulating material 156 positioned below the fire extinguishing pipe 140, and have a plurality of holes 152 formed at a portion in contact with the fire extinguishing pipe 140. The heat insulating material 150b may cover the side surfaces of the plurality of battery cells 130.

Referring to FIG. 10, a heat insulating material 150 including a first heat insulating material disposed between a first battery module A1 and a fire extinguishing pipe 140, and a second heat insulating material disposed between a second battery module A2 and the fire extinguishing pipe 140 as described above, and a heat insulating material 150b including an upper heat insulating material 154 positioned above the fire extinguishing pipe 140 and a lower heat insulating material 156 positioned below the fire extinguishing pipe 140 may be arranged together in a battery pack 100 according to embodiments of the present disclosure.

Referring to FIG. 10 which shows the cross-section at a position where a hole 152 is formed in heat insulating materials 150 and 150b according to embodiments of the present disclosure, the size of the hole 152 of the heat insulating material 150 including a first heat insulating material disposed between a first battery module A1 and a fire extinguishing pipe 140, and a second heat insulating material disposed between a second battery module A2 and the fire extinguishing pipe 140 as described above may be the same as the size of the hole 152 of the heat insulating material 150b including an upper heat insulating material 154 positioned above the fire extinguishing pipe 140 and a lower heat insulating material 156 positioned below the fire extinguishing pipe 140. However, the size of the hole and whether the sizes of the holes of the plurality of heat insulating materials 150 and 150b are the same are not particularly limited as long as the structure allows heat transfer to the fire extinguishing pipe 140.

As illustrated in FIG. 10, according to embodiments of the present disclosure, in the case of a battery pack in which both types of heat insulating materials 150 and 150b as described above are arranged, the fire extinguishing function may be further improved. In this circumstance, double insulation may be achieved through two types of heat insulating materials 150 and 150b, and multiple holes 152 may be maintained so that the distinction between the melting region of the fire extinguishing pipe 140 and the insulated region of the battery cell 130 may become clearer, making it easier to control thermal runaway.

Throughout the present disclosure, the heat insulating materials 150, 150a and 150b may be formed of a single member or a plurality of members that block heat transfer between a plurality of adjacent battery cells or a plurality of battery modules.

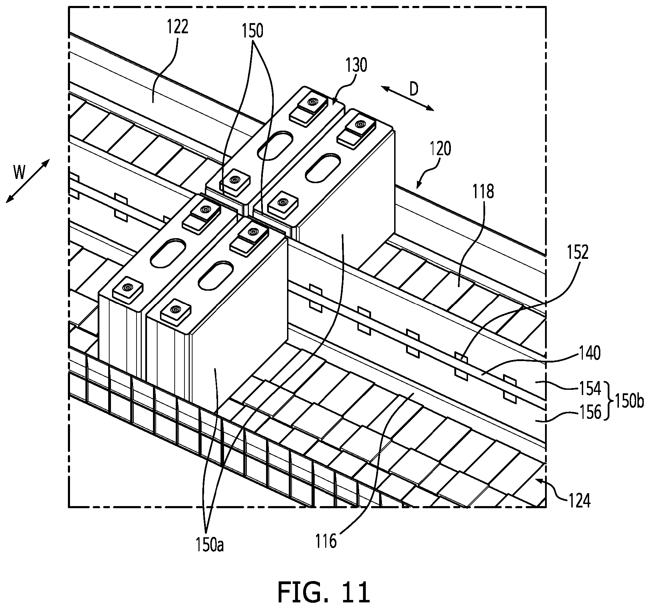

FIG. 11 is a perspective view illustrating a part of an energy storage system (ESS) according to embodiments of the present disclosure.

An energy storage system (ESS) according to embodiments may include a battery pack 100 as described above. The fire extinguishing agent 144 discharged from the melting fire extinguishing pipe 140 may be blocked from moving to the lower plate 114 of the case 110 by the panel body 124 of the lower panel 120, and may move along a path formed in the width direction W and/or the longitudinal direction D. The lower panel 120 may include an edge member 122 that protrudes upward from the edge of the panel body 124 and supports the side surfaces of the plurality of battery cells 130 or a plurality of battery modules.

The lower panel 120 of an energy storage system (ESS) according to embodiments may include a panel body 124 that is installed in a plate shape between a lower plate 114 of a case 110 and a plurality of battery cells 130 to block the movement of a fire extinguishing agent 144 discharged from a melting fire extinguishing pipe 140, a first guide portion 116 that is installed on an upper side surface of the panel body 124 and forms a flow path in a longitudinal direction D of the case 110 to guide the movement of the fire extinguishing agent 144 discharged from the fire extinguishing pipe 140, and a second guide portion 118 that is installed on an upper side surface of the panel body 124 and forms a flow path in a width direction W of the case 110 to guide the movement of the fire extinguishing agent 144 discharged from the fire extinguishing pipe 140.

The first guide portion 116 may be installed on the upper side surface of the panel body 124 and may be deformed within a range that allows the second guide portion 118 to form a path in the longitudinal direction D of the case 110 and serve to guide the movement of the fire extinguishing agent 144 discharged from the fire extinguishing pipe 140. The fire extinguishing agent 144 discharged from the fire extinguishing pipe 140 may fall to the panel body 124 and may be guided in the longitudinal direction D along the first guide portion 116 to quickly extinguish a fire occurring in a battery cell adjacent to the first guide portion 116 and prevent thermal runaway from spreading to the neighboring battery cell 130.

The second guide portion 118 may be installed on the upper side surface of the panel body 124 and may be deformed within a range that allows the second guide portion 118 to form a path in the width direction W of the case 110 and serve to guide the movement of the fire extinguishing agent 144 discharged from the fire extinguishing pipe 140. The second guide portion 118 may be located at the lower portion of the battery cell 130 and may form a path through which the fire extinguishing agent 144 moves along the width direction W of the panel body 124.

The first guide portion 116 and the second guide portion 118 may be connected to enable rapid horizontal movement of the fire extinguishing agent in contact with the upper side surface of the panel body, thereby enabling the early extinguishment of a fire.

For example, when a fire occurs, if the melting region of the fire extinguishing pipe 140 corresponding to the plurality of holes 152 melts and the fire extinguishing agent 144 moves toward the lower panel 120, the movement of the fire extinguishing agent 144 may be guided in the width direction W and the longitudinal direction D of the case 110 by the first guide portion 116 and the second guide portion 118.

### Description of some reference symbols

100: battey pack
110: case
112: accommodation space
114: bottom plate
116: first guide portion
118: second guide portion
120: lower panel
122: edge member
124: panel body
A1: first battery module
A2: second battery module
D: longitudinal direction
W: width direction
130: battery cell
132: fire battery cell
140: fire extinguishing pipe
142: connection pipe
143: supply pipe
144: fire extinguishing agent
150, 150a, 150b: heat insulating material
152, 152': hole
154: upper heat insulating material
156: lower heat insulating material

## Claims

1. A battery pack (100) comprising:
a case (110) configured to have an accommodation space (112) therein;
at least one battery module (A1, A2) configured to be disposed in the accommodation space (112) and include a plurality of battery cells (130);
a fire extinguishing pipe (140) configured to be disposed in the accommodation space (112) and have a fire extinguishing agent (144); and
at least one heat insulating material (150) configured to be disposed between the battery module (A1, A2) and the fire extinguishing pipe (140) and have a plurality of holes (152) formed at a position corresponding to that of the fire extinguishing pipe (140),
wherein the heat insulating material (150) covers a side surface of the battery module (A1, A2), and
wherein the fire extinguishing pipe (140) melts at a temperature equal to or greater than a threshold value, and a fire extinguishing agent (144) in the fire extinguishing pipe (140) is discharged into the accommodation space (112).

2. The battery pack (100) as claimed in claim 1, wherein the battery module (A1, A2) is disposed along a longitudinal direction of the case (110), and
wherein the fire extinguishing pipe (140) extends along the longitudinal direction of the case(110), and spaced a predetermined distance from a side surface of the battery module (A1, A2).

3. The battery pack (100) as claimed in claim 1 or claim 2, wherein each of the plurality of holes (152) corresponds to each side surface of the plurality of battery cells (130), and
wherein the fire extinguishing pipe (140) includes a plurality of melting regions corresponding to the plurality of holes (152).

4. The battery pack (100) as claimed in claim 3, wherein the plurality of melting regions include a first melting region that melts at a temperature equal to or greater than the threshold value,
wherein the plurality of battery cells (130) includes a first battery cell corresponding to the first melting region, and
wherein the fire extinguishing agent (144) is supplied toward the first battery cell through the first melting region at a temperature equal to or greater than the threshold value.

5. The battery pack (100) as claimed in one of claims 1 to 4, wherein each of the plurality of holes (152) corresponds to a side surface of two or three adjacent battery cells among the plurality of battery cells (130).

6. The battery pack (100) as claimed in one of claims 1 to 5, wherein a shape of each of the plurality of holes (152) is at least one of a rectangle, a square, a circle, an oval, and a shape in which an upper semicircle is in contact with a lower semicircle at a straight line.

7. The battery pack (100) as claimed in one of claims 1 to 6,
wherein a length of each of the plurality of holes (152) along a longitudinal direction of the case (110) is smaller than a length of each of the plurality of battery cells (130) along the longitudinal direction.

8. The battery pack (100) as claimed in one of claims 1 to 7, wherein a length of each of the plurality of holes (152) along a thickness direction of the case (110) is greater than an outer diameter of the fire extinguishing pipe (140).

9. The battery pack (100) as claimed in one of claims 1 to 8, wherein a center of each of the plurality of holes (152) corresponds to a height of the fire extinguishing pipe (140).

10. The battery pack (100) as claimed in one of claims 1 to 9, wherein a melting temperature of the fire extinguishing pipe (140) corresponds to an ignition temperature of the plurality of battery cells (130).

11. The battery pack (100) as claimed in one of claims 1 to 10, wherein the at least one battery module (A1, A2) comprises a first battery module (A1) and a second battery module (A2) which are spaced apart from one another with a predetermined gap along a width direction of the case (110), and
wherein the fire extinguishing pipe (140) is disposed between the first battery module (A1) and the second battery module (A2).

12. The battery pack (100) as claimed in claim 11, wherein the heat insulating material (150) comprises:
a first heat insulating material disposed between the first battery module (A1) and the fire extinguishing pipe (140); and
a second heat insulating material disposed between the second battery module (A2)and the fire extinguishing pipe (140).

13. The battery pack (100) as claimed in one of claims 1 to 12, wherein the plurality of battery cells (130) are disposed side by side along a longitudinal direction of the case (110).

14. The battery pack (100) as claimed in one of claims 1 to 13, further comprising at least one heat insulating material (150a), each of which is disposed between two adjacent battery cells among the plurality of battery cells (130).

15. The battery pack (100) as claimed in one of claims 1 to 14, wherein a material of the fire extinguishing pipe (140) comprises at least one of polypropylene (PP), linear low density polyethylene (LLDPE), polyvinyl chloride (PVC), polyamide 6 (PA6), and polyamide 66 (PA66).
